(19) Europäisches Patentamt / European Patent Office / Office européen des brevets

(11) **EP 4 098 991 B1**

(12) **EUROPÄISCHE PATENTSCHRIFT**

(45) Veröffentlichungstag und Bekanntmachung des Hinweises auf die Patenterteilung:
**26.02.2025 Patentblatt 2025/09**

(21) Anmeldenummer: **22176488.9**

(22) Anmeldetag: **31.05.2022**

(51) Internationale Patentklassifikation (IPC):
*G01M 17/10* (2006.01)     *B61K 9/12* (2006.01)
*B61L 1/06* (2006.01)     *B61L 25/02* (2006.01)
*B61L 27/57* (2022.01)

(52) Gemeinsame Patentklassifikation (CPC):
**G01M 17/10; B61K 9/12; B61L 1/06; B61L 25/021; B61L 27/57**

(54) **VORRICHTUNG UND VERFAHREN ZUR ERMITTLUNG VON UNRUNDHEITEN EINES RADES EINES SCHIENENGEBUNDENEN FAHRZEUGES**

DEVICE AND METHOD FOR DETERMINING OUT-OF-ROUNDNESS OF A WHEEL OF A RAIL-BOUND VEHICLE

DISPOSITIF ET PROCÉDÉ POUR DÉTERMINER LES FAUX-RONDS D'UNE ROUE D'UN VÉHICULE SUR RAILS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.05.2021 DE 102021113968**

(43) Veröffentlichungstag der Anmeldung:
**07.12.2022 Patentblatt 2022/49**

(73) Patentinhaber: **Schenck Process Europe GmbH 64293 Darmstadt Hessen (DE)**

(72) Erfinder:
• MUELLER, Ralph
  64293 Darmstadt (DE)
• RAIS, Viktor
  64293 Darmstadt (DE)

(56) Entgegenhaltungen:
DE-A1- 102019 114 288     DE-A1- 19 941 843
FR-A1- 2 893 900

**Beschreibung**

Die Erfindung betrifft eine Vorrichtung zur Ermittlung von Unrundheiten eines Rades eines schienengebundenen Fahrzeuges gemäß dem Oberbegriff des Anspruchs 1 oder 2 sowie ein Verfahren zur Ermittlung von Unrundheiten eines Rades eines schienengebundenen Fahrzeuges gemäß Anspruch 10 oder 11.

Den Laufflächen der Räder schienengebundener Fahrzeuge kommt im Hinblick auf Fahrkomfort und Sicherheit des Schienenverkehrs eine entscheidende Bedeutung zu, da die bei der Fahrt auftretenden statischen und dynamischen Kräfte über die Laufflächen und Spurkränze in die Schienen eingeleitet werden. Im Idealfall entspricht die Geometrie der Laufflächen einer die Radachse konzentrisch umlaufenden, leicht konischen Mantelfläche, mit der die Räder auf den Schienen abrollen. Die Laufflächen bilden somit den rotierenden Teil des Rad-Schiene-Kontakts. Abweichungen von der kreisförmigen Idealform, beispielsweise bedingt durch ungleichmäßigen Verschleiß, Material- und Herstellungsfehler und dergleichen, werden als Unrundheiten bezeichnet. Dazu zählen unter anderem singuläre Unrundheiten wie Flachstellen, Abplattungen und Materialauftragungen sowie periodische Unrundheiten wie Exzentrizitäten, Ovalitäten und Polygonisierungen. Vor allem bei hohen Fahrgeschwindigkeiten erhöhen Unrundheiten den dynamischen Anteil der vom Rad auf die Schiene ausgeübten Kräfte mit der Gefahr von Schäden am Schienenfahrzeug und Schienenfahrweg. Die damit einhergehenden Sicherheitsrisiken sind ebenso wie Lärmemissionen und Erschütterungen des Untergrunds unerwünscht.

Zur Vermeidung derartiger Auswirkungen hat es daher nicht an Bestrebungen gefehlt, von Unrundheiten betroffene Räder eines Schienenfahrzeugs möglichst frühzeitig zu identifizieren. Neben dem händischem Erfassen der Geometrie eines Rades mittels Messlehren bei stehenden Fahrzeugen, was sich aufgrund des damit einhergehenden Zeitaufwands vor allem bei der Durchführung sonstiger Wartungs- und Instandsetzungsmaßnahmen anbietet, ist es auch schon bekannt, Unrundheiten an einem Rad während der Überfahrt des Schienenfahrzeugs über eine mit Sensoren ausgerüstete Messstrecke zu detektieren.

So ist aus der aus der EP 1 212 228 B1 bereits ein Verfahren und eine Vorrichtung zur Feststellung von Unrundheiten und Flachstellen an Fahrzeugrädern von Schienenfahrzeugen bekannt, bei denen mit Hilfe mehrerer Kraftaufnehmer innerhalb einer vorgegebenen Messstrecke die auf die Schienen wirkenden Vertikalkräfte erfasst werden. Die Kraftaufnehmer sind als Wägezellen ausgebildet, welche über eine Länge von mindestens dem einfachen Radumfang zwischen den Schienen und ortsfesten Schwellen angeordnet sind. Eine elektronische Auswerteeinrichtung errechnet beim Überfahren der Messstrecke aus den Vertikalkraftsignalen eine mittlere Gewichtsbelastung und vergleicht diese mit dem zeitlichen Signalverlauf. Bei Überschreiten einer vorgegebenen Abweichung wird eine Unrundheit bzw. Flachstelle angezeigt. Auf diese Weise lassen sich Unrundheiten und Flachstellen sehr zuverlässig erkennen.

In der EP 0 282 615 A1 ist eine Anordnung zum Detektieren von Radschäden mittels sich linear entlang einer Schiene erstreckender Beschleunigungsaufnehmer beschrieben. Die linearen Beschleunigungsaufnehmer erfassen an jedem beliebigen Punkt ihrer Länge die vom Rad auf die Schiene übertragene Beschleunigung. Die auf diese Weise gewonnenen einzelnen Messsignale werden einer Auswerteprozedur unterworfen, um eine Aussage über das Ausmaß eines Radschadens zu erhalten. Dabei werden aus dem Messsignalverlauf mittels geeigneter Frequenzfilterstufen und/oder einer FFT-Analyse Charakteristika herausgefiltert, die Aufschluss über Art und Schwere des Radschadens geben. Der Nachteil dieser Lehre ist ein lediglich grobes Messergebnis.

Ferner offenbart die EP 1 883 565 A1 ein Verfahren zur Erfassung der Radformen der Räder von Schienenfahrzeugen mit Hilfe einer Messstrecke, die aus einer Reihe von an den Schienen angebrachten Messelementen gebildet ist. Die auf die Messelemente einwirkenden Radlasten erzeugen kraftproportionale elektrische Signale, die einer elektronischen Auswerteeinrichtung zur Auswertung zugeführt werden. Dabei wird in der Auswerteeinrichtung aus den von den Messelementen abgeleiteten Signalen, die der Bewegung der Schiene in Vertikalrichtung und vorzugsweise auch in Querrichtung entsprechen, ein Informationsarray erzeugt, das zumindest einen Radumfang abbildet. Das Informationsarray setzt sich aus mehreren Informationszellen zusammen, wobei sich die jeweiligen Signalanteile unterschiedlicher Informationszellen stetig aneinanderfügen lassen und relevante Signalanteile ausgewertet werden.

Aus der FR 2 893 900 A1 sind ein Verfahren und eine Vorrichtung zur Erkennung von Rundheitsfehlern an Rädern von Schienenfahrzeugen bekannt. Ein Abschnitt eines auf Schwellen ruhenden Gleises ist zu diesem Zweck mit piezoelektrischen Beschleunigungssensoren ausgerüstet, die bei der Überfahrt über den Gleisabschnitt die Amplitude der von den Rädern verursachten Gleisschwingungen aufnehmen. Die Beschleunigungssensoren sind jeweils zwischen den Schwellen des Gleisabschnitts angeordnet, dessen Länge mindestens dem Umfang der Räder entspricht. Induktive Sensoren an den Enden des Gleisabschnitts dienen zur Synchronisierung und zur Ermittlung der Radgeschwindigkeit. Die von den Beschleunigungssensoren aufgenommenen Signale werden in einem Schwingungsbereich mit maximaler Dämpfung digitalisiert und gefiltert, so dass durch einen Vergleich mit Referenz-Signalverläufen Fehler detektiert, ihre Art näher bestimmt und die von Fehlern betroffenen Räder identifiziert werden können.

Die DE 10 2019 114 288 A1 offenbart ein Verfahren und eine Vorrichtung zur Lokalisierung einer singulären Fehlstelle an der Lauffläche eines Rades eines schienengebundenen Fahrzeugs bei der Überfahrt einer als Messstrecke ausgebildeten Schiene in X-Richtung, wobei mit Hilfe einer Kraftmesseinrichtung kontinuierlich die Aufstandskraft F des Rades über die Länge L der Messstrecke erfasst wird. Eine Entfernungsmesseinrichtung erfasst dabei den seitlichen Abstand des Rades zur Schiene an mindestens einer definierten Position innerhalb der Messstrecke. Die Detektion der Fehlstelle erfolgt dann durch Auswertung des Verlaufs der Radaufstandskraft F in einer elektronischen Auswerteeinheit, wobei zum Zeitpunkt des Auftretens der Fehlstelle und auf Basis des erfassten seitlichen Abstandes die Lage des Rad-Schiene-Kontakts auf der Lauffläche des Rades bestimmt wird. Ausgehend von diesem Stand der Technik liegt der Erfindung die Aufgabe zugrunde, eine Vorrichtung und ein Verfahren anzugeben, mit denen die Unrundheiten eines Rades eines schienengebundenen Fahrzeuges unter Berücksichtigung wirtschaftlicher Aspekte zuverlässig und mit hoher Genauigkeit ermittelt werden können.

Diese Aufgabe wird durch eine Vorrichtung mit den Merkmalen des Patentanspruchs 1 und alternativ des Patentanspruchs 2, sowie durch ein Verfahren mit den Merkmalen des Patentanspruchs 10 und alternativ des Patentanspruchs 11 gelöst.

Vorteilhafte Ausführungsformen ergeben sich aus den Unteransprüchen.

Die Erfindung basiert, wie auch der erwähnte Stand der Technik, auf dem Grundgedanken, die bei der Überfahrt eines Schienenfahrzeugs über eine Messstrecke gewonnen Messwerte von den Radaufstandskräften nicht nur zur Gewichtsermittlung der Schienenfahrzeuge zu nutzen, sondern gleichzeitig im Hinblick auf mögliche Radunrundheiten eines Rades auszuwerten. Voraussetzung für eine vollständige Erfassung der Unrundheiten ist, dass sich die Messstrecke über mindestens den einfachen Radumfang erstreckt. Um im Rahmen der Auswertung auch Aussagen über die Periodizität der Unrundheiten bzw. deren Wellenlänge machen und graphisch darstellen zu können, ist die Kenntnis des tatsächlichen Radumfangs (Ist-Radumfang) eines zu prüfenden Rades unerlässlich. Dabei erweist es sich als problematisch, dass der Ist-Radumfang aufgrund allmählichen Verschleißes vom ursprünglichen Radumfang (nomineller Radumfang) unterscheidet. Im Rahmen der Erfindung ist es daher vorgesehen, den Ist-Radumfang beim Überrollen der Messstrecke bzw. die Zeitdauer $\Delta t$, die dem Abrollen des Ist-Radumfangs $U_{ist}$ auf der Messstrecke entspricht, zu ermitteln.

In diesem Zusammenhang ist mit der Erfindung erkannt worden, dass es für die Ermittlung des Ist-Radumfangs bzw. der Zeitdauer $\Delta t$ bereits ausreicht, wenn sich charakteristische Merkmale im Verlauf des Messsignals wiederholen, wobei das Messsignal auch von anderen Sensoren als den Kraftaufnehmern stammen kann. Deutet eine ausreichend große Übereinstimmung auf eine Wiederholung des Messsignalverlaufs hin, wird gemäß der Erfindung davon ausgegangen, dass der Abschnitt des Messsignalverlaufs zwischen einem charakteristischen Merkmal und seiner Wiederholung dem Ist-Radumfang entspricht. In Abhängigkeit der Zeitdauer $\Delta t$ zwischen dem ersten Erfassen eines charakteristischen Merkmals zum Zeitpunkt $t_1$ und dessen Wiederholung zum Zeitpunkt $t_2$ in Kombination mit der bekannten Fahrgeschwindigkeit v kann der tatsächliche Radumfang $U_{ist}$ berechnet werden nach:

$$U_{ist} = v * \Delta t \qquad \text{mit } \Delta t = t_2 - t_1$$

Der auf diese Weise ermittelte Ist-Radumfang $U_{ist}$ bzw. die so ermittelte Zeitdauer $\Delta t$ wird gemäß der Erfindung der Auswertung des mit Kraftaufnehmern ermittelten Kraftsignalverlaufs zugrunde gelegt, wobei der für die Auswertung bestimmte Abschnitt des Kraftsignalverlaufs der Länge des Ist-Radumfangs bzw. dem Zeitfenster $\Delta t$ entspricht.

Ein erster sich daraus ergebender Vorteil liegt in der Möglichkeit, Sensoren einsetzen zu können, die in der Anschaffung und/oder Installation einen verhältnismäßig geringen Aufwand erfordern. Beispielsweise lassen sich für die Erfindung geeignete Sensoren, wie zum Beispiel Beschleunigungsaufnehmer im Bereich zwischen den Schwellen direkt an den Schienen montieren, ohne dass dabei die Lagerung der Schiene auf den Schwellen betroffen ist. Die Installation einer erfindungsgemäßen Vorrichtung an einem Gleis ist daher mit verhältnismäßig geringem gerätetechnischem Aufwand und in kurzer Zeit möglich, was zu einem außerordentlich vorteilhaften Kosten-Nutzen-Verhältnis führt.

Wegen des lediglich geringen Eingriffs in den bestehenden Gleisbau eignen sich erfindungsgemäße Vorrichtungen und Verfahren nicht nur für den Neubau von Messstrecken, sondern ausgezeichnet auch zur Nachrüstung bestehender Messstrecken, deren Funktionalität auf diese Weise erweitert wird.

Für die Nutzer und Betreiber erfindungsgemäßer Schienenverkehrswege ist es von ausschlaggebender Bedeutung, dass Beeinträchtigungen des Schienenverkehrs, wie zum Beispiel die temporäre Stilllegung einer Bahnstrecke im Zuge der erfindungsgemäßen Herstellung bzw. Nachrüstung einer Messstrecke auf ein Minimum beschränkt sind.

Da zur Ermittlung des Ist-Radumfangs $U_{ist}$ keine absoluten Messwerte benötigt werden, sondern der relative Messsignalverlauf genügt, sind die Anforderungen an die Sensoren weniger hoch mit dem weiteren Vorteil, dass Kalibrierintervalle für die Sensoren größer gewählt werden können. Im Ergebnis tragen erfindungsgemäße Vorrichtungen und Verfahren erheblich zur Steigerung der Wirtschaftlichkeit gegenüber dem Stand der Technik bei.

Die Länge einer erfindungsgemäßen Messstrecke ist derart gewählt, dass aus der Wiederholung signifikanter Merkmale im Messsignalverlauf mit ausreichender Wahrscheinlichkeit darauf geschlossen werden kann, dass die sich wiederholende Merkmale auf denselben Umfangsabschnitt des Rades zurückgehen. Dazu ist es notwendig, dass die Länge einer erfindungsgemäßen Messstrecke größer ist als der einfache Ist-Radumfang $U_{ist}$. Auf der sicheren Seite liegend wird erfindungsgemäß bevorzugt, dass die Länge der Messstrecke mindestens dem 1,2-fachen nominellen Radumfang $U_{nom}$ entspricht. Die Aussagekraft der Messwerte kann weiter gesteigert werden, wenn die Länge der Messstrecke größer gewählt wird. In diesem Sinne von der Erfindung besonders bevorzugt ist eine Länge der Messstrecke, die mindestens dem 1,5-fachen nominellen Radumfang $U_{nom}$ entspricht oder sogar mindestens dem 2-fachen nominellen Radumfang $U_{nom}$.

Die Übereinstimmung sich wiederholender signifikanter Merkmale im Messsignalverlauf wird in vorteilhafter Weiterbildung der Erfindung durch Autokorrelation ermittelt, wobei der Messsignalverlauf auf Zusammenhänge zeitlich beabstandeter Messsignalverlaufsabschnitte untersucht wird.

Gemäß einer Ausführungsform der Erfindung werden der Kraftsignalverlauf der ersten Teilmessstrecke und der Beschleunigungssignalverlauf der zweiten Teilmessstrecke unabhängig voneinander erfasst. Die Messdaten beider Teilmessstrecken fließen auf diese Weise unmittelbar in die Auswertung ein, was die Genauigkeit und Zuverlässigkeit der Auswertung fördert.

Dabei besteht die Möglichkeit, dass die erste Teilmessstrecke und zweite Teilmessstrecke in Fahrtrichtung aufeinander folgen, also räumlich voneinander getrennt sind, wobei die zweite Teilmessstrecke auf die erste Teilmessstrecke folgt oder umgekehrt. Die Länge der Messstrecke ergibt sich also durch eine Addition der ersten Teilmessstrecke und zweiten Teilmessstrecke, der Kraftsignalverlauf und Beschleunigungssignalverlauf werden dabei zeitlich aufeinanderfolgend erzeugt. Das hat zunächst den Vorteil, dass die beiden Teilmessstrecken unabhängig voneinander errichtet werden können. Insbesondere beim Nachrüsten bestehender Messstrecken ist ein Eingriff in die bestehende Teilmessstrecke nicht notwendig, was ansonsten mit der Gefahr verbunden wäre, dass durch die Baumaßnahme die dort bestehende Messeinrichtung eventuell beeinträchtigt würde. Zudem werden bei dieser Ausführungsform Messsignale über eine verhältnismäßig große Länge gewonnen, die deutlich mehr als den zweifachen Radumfang abbildet und daher die Auswertung der Messwerte auf einer breiteren Basis ermöglicht.

Alternativ dazu ist es möglich, dass die erste Teilmessstrecke und zweite Teilmessstrecke in Fahrtrichtung teilweise oder vollständig überlappen. Bei dieser Ausführungsform werden die Kraftsignale und Beschleunigungssignale zumindest zum Teil zeitgleich erfasst. Eine solche Ausführungsform eröffnet die Möglichkeit, die Messstrecke äußerst kompakt auszubilden, was vor allem bei begrenztem Raumangebot von Vorteil ist und so den Einsatzbereich einer erfindungsgemäßen Vorrichtung auf beengte Verhältnisse erweitert.

Gemäß einer anderen Ausführungsform der Erfindung werden der Kraftsignalverlauf der ersten Teilmessstrecke und der Beschleunigungssignalverlauf einer Restmessstrecke, die zusammen die zweite Teilmessstrecke ergeben, miteinander kombiniert. Um der Auswertung einen durchgängig einheitlichen Signalverlauf zugrunde legen zu können, ist es dabei vorgesehen, den Beschleunigungssignalverlauf in einen Kraftsignalverlauf zu transformieren oder den Kraftsignalverlauf in einen Beschleunigungssignalverlauf. Da die Kraftaufnehmer funktionell sowohl Bestandteil der ersten Teilmessstrecke als auch zweiten Teilmessstrecke sind, kommt ihnen eine Doppelfunktion zu, so dass sich bei dieser Ausführungsform der Aufwand für die Messeinrichtung und deren Installation auf ein absolutes Minimum reduzieren lässt.

Zur Erfassung der Radaufstandskraft werden als Kraftaufnehmer bevorzugt Wägebalken, Wägezellen oder Wägediscs verwendet, die unter der Schiene, üblicherweise in der Schwelle oder zwischen Schiene und Untergrund angeordnet sind. Um ein über die Länge der ersten Teilmessstrecke möglichst gleichmäßiges Kraftsignal zu erhalten, sind vorzugsweise mehrere, in Fahrtrichtung aufeinanderfolgende Kraftaufnehmer vorgesehen, deren gegenseitiger Abstand vorzugsweise zwischen 300 mm und 1000 mm liegt. Entsprechendes gilt für die Anordnung der Beschleunigungsaufnehmer mit der Maßgabe, dass deren maximaler Abstand 2000 mm beträgt

Bei einer auf Schwellen gelagerten Messstrecke orientiert sich der maximale Abstand der Kraftaufnehmer und Beschleunigungsaufnehmer vorteilhafterweise am Schwellenabstand, wobei der maximale Abstand der Kraftaufnehmer und/oder Beschleunigungsaufnehmer dem zweifachen Schwellenabstand entspricht, vorzugsweise dem einfachen Schwellenabstand. Diese Maßnahmen erleichtern die Auswertung des Signalverlaufs und erhöht die Präzision der daraus gewonnen Ergebnisse. Die Kraftaufnehmer sind unterhalb der Schiene, vorzugsweise zwischen Schiene und Schwelle oder Schiene und Untergrund angeordnet. Die Beschleunigungsaufnehmer werden direkt an der Schiene angeordnet. Dementsprechend besteht der Vorteil der Verwendung von Beschleunigungsaufnehmern darin, dass kein Eingriff in den Unterbau der Schienen bzw. im Gleisbett vorgenommen werden muss. Damit geht eine erhebliche Zeit - und Kostenersparnis einher.

Vorzugsweise besitzt eine erfindungsgemäße Messstrecke mindestens einen Querkraftaufnehmer pro Schiene, der beispielsweise in die Schiene integriert ist und dort die von einer Radlast in der Schiene hervorgerufenen Schubspannungen erfasst. Geeignete Querkraftaufnehmer sind zum Beispiel Dehnmessstreifen oder Messaugen. Anhand des von einem Querkraftaufnehmer erzeugten Querkraftsignals lässt sich exakt der Zeitpunkt ermitteln, zu dem ein Rad den Querkraftsensor überrollt. Ein solches Signal kann beispielsweise als Trigger für den Start und/oder den Stopp eines Messvorgangs verwendet werden und/oder zur Achs- und Fahrzeugidentifizierung.

Durch Anordnung zweier Querkraftaufnehmer am Anfang und Ende der ersten Teilmessstrecke L1, deren Messeinrichtung Kraftaufnehmer umfasst, können diese zur Kraftnebenschlusskorrektur genutzt werden bzw. werden Kraftnebenschlüsse aus der angrenzenden Schiene vermieden. Somit wird einerseits eine kontinuierliche Erfassung der Signale aus den unter der Schiene angeordneten Kraftaufnehmern, andererseits eine exakte Ermittlung der Radaufstand ermöglicht.

Zudem kann mit Hilfe zweier Querkraftaufnehmer, die in bekanntem Abstand entlang der Schiene angeordnet sind, auf Basis der den beiden Querkraftsignalen zugeordneten Zeitpunkte die Dauer der Überfahrt vom ersten Querkraftaufnehmer bis zum zweiten Querkraftaufnehmer ermittelt und im Weiteren die Fahrgeschwindigkeit v des Schienenfahrzeugs bestimmt werden. Vorteilhafterweise fließt die so berechnete Fahrgeschwindigkeit v unmittelbar in die Ermittlung der Unrundheiten eines Rades ein.

Eine bevorzugte Ausführungsform der Erfindung sieht vor, innerhalb einer Teilmessstrecke in jeder Schiene mehrere, in Fahrtrichtung aufeinanderfolgende Querkraftaufnehmer vorzusehen, die die Teilmessstrecke in mehrere Abschnitte unterteilen. Das bringt unter anderem den weiteren Vorteil, dass Veränderungen der Fahrgeschwindigkeit v innerhalb der Messstrecke erfasst und bei der Ermittlung des Ist-Radumfangs $U_{ist}$ berücksichtigt werden können, wodurch sich bei der Auswertung des Messsignale eine höhere Genauigkeit erzielen lässt.

Weiterhin bevorzugt ist, dass die Querkraftaufnehmer einen gegenseitigen Abstand aufweisen, der dem einfachen oder zweifachen Schwellenabstand entspricht. Bei dieser Ausführungsform ist gewährleistet, dass sich zwischen zwei benachbarten Querkraftaufnehmern einer Teilmessstrecke jeweils nur ein Rad eines Schienenfahrzeugs befindet; ein in diesem Abschnitt gemessenes Signal kann also eindeutig diesem Rad zugeordnet werden. Die Auswertung der Messsignale wird dadurch vereinfacht, was nicht zuletzt zu einer hohen Genauigkeit und Qualität des Auswertungsergebnisses beiträgt.

Ohne sich darauf einzuschränken wird die Erfindung nachstehend anhand in der Zeichnung dargestellter Ausführungsbeispiele näher erläutert, wobei weitere Merkmale und Vorteile der Erfindung offenbar werden. Soweit zweckdienlich werden für gleiche oder funktionsgleiche Merkmale unterschiedlicher Ausführungsformen gleichlautende Bezugszeichen verwendet.

Es zeigt

Fig. 1      eine perspektivische Schrägansicht auf eine erste Ausführungsform einer erfindungsgemäßen Vorrichtung,

Fig. 2a      den zeitlichen Verlauf des in der ersten Teilmessstrecke der in Fig. 1 dargestellten Vorrichtung aufgenommenen Kraftsignals,

Fig. 2b      den zeitlichen Verlauf des in der zweiten Teilmessstrecke der in Fig. 1 dargestellten Vorrichtung aufgenommenen Beschleunigungssignals,

Fig. 3      eine perspektivische Schrägansicht auf eine zweite Ausführungsform einer erfindungsgemäßen Vorrichtung,

Fig. 4a      den zeitlichen Verlauf des in der ersten Teilmessstrecke der in Fig. 3 dargestellten Vorrichtung aufgenommenen Kraftsignals,

Fig. 4b      den zeitlichen Verlauf des in der zweiten Teilmessstrecke der in Fig. 3 dargestellten Vorrichtung aufgenommenen Beschleunigungssignals,

Fig. 5      eine perspektivische Schrägansicht auf eine dritte Ausführungsform einer erfindungsgemäßen Vorrichtung,

Fig. 6a      den zeitlichen Verlauf des in der ersten Teilmessstrecke der in Fig. 5 dargestellten Vorrichtung aufgenommenen Kraftsignals,

Fig. 6b      den zeitlichen Verlauf des in der Restmessstrecke der in Fig. 5 dargestellten Vorrichtung aufgenommenen Beschleunigungssignals, und

Fig. 6c      den zeitlichen Verlauf des in Fig. 6a dargestellten Kraftsignals kombiniert mit dem in Fig. 6b dargestellten, in ein Kraftsignal transformierten Beschleunigungssignal.

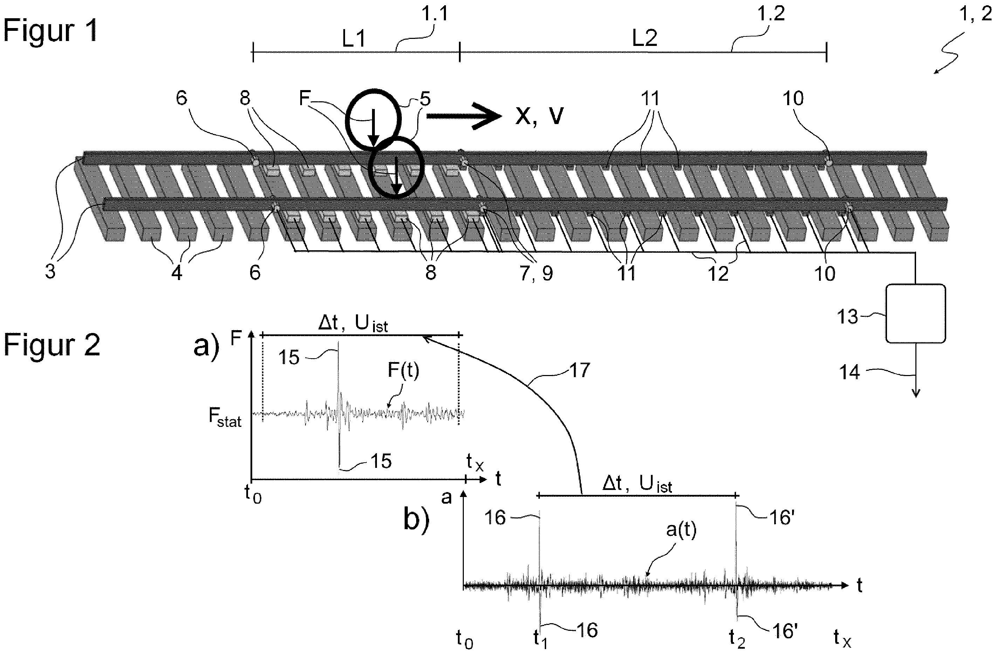

Fig. 1 zeigt eine erste Ausführungsform einer erfindungsgemäßen Vorrichtung mit einer Messstrecke 1 zur Auswertung der Radaufstandskraft F und Beschleunigung a während der Überfahrt eines schienengebundenen Fahrzeugs über die Messstrecke 1. In vereinfachter Darstellung sieht man einen als Messstrecke 1 ausgebildeten Abschnitt eines Schienenfahrwegs 2 mit zwei parallel zueinander verlaufenden Schienen 3, die von einer Vielzahl von Schwellen 4 getragen sind. Der gegenseitige Abstand der Schwellen 4 liegt in einem Bereich von etwa 600 mm bis 700 mm. Der Schienenfahrweg 2 wird von einem schienengebundenen Fahrzeug mit einer Geschwindigkeit v befahren, beispielsweise einem Personen- oder Güterwagen, für den stellvertretend lediglich die Räder 5 einer nicht weiter dargestellten Radsatzachse dargestellt sind. Die Fahrtrichtung des schienengebundenen Fahrzeugs ist mit x bezeichnet, die von einem Rad 5 auf eine Schiene 3 ausgeübten Radaufstandskraft mit F.

Die Messstrecke 1 umfasst eine erste Teilmessstrecke 1.1 zur Erfassung der Radaufstandskraft F und eine zweite Teilmessstrecke zur 1.2 zur Erfassung der Beschleunigung a, mit der die Räder 5 während der Überfahrt eines schienengebundenen Fahrzeugs über die Messstrecke 1 auf die Schienen 3 einwirken. In der vorliegenden ersten Ausführungsform der Erfindung folgen die beiden Teilmessstrecken 1.1 und 1.2 in Fahrtrichtung x aufeinander, wobei die zweite Teilmessstrecke 1.2 in Fahrtrichtung x nahtlos an die erste Teilmessstrecke 1.1 anschließt. Eine umgekehrte Reihenfolge und/oder ein räumlicher Abstand zwischen den beiden Teilmessstrecken 1.1 und 1.2 liegen ebenso im Rahmen der Erfindung.

Die erste Teilmessstrecke 1.1 erstreckt sich über eine Länge L1, die mindestens dem einfachen nominellen Radumfang $U_{nom}$ der Räder 5 der auf dem Schienenfahrweg 2 verkehrenden Fahrzeuge entspricht. Bei einem Standardraddurchmesser von etwa 1250 mm ergibt sich somit eine Länge von mindestens 2925 mm.

Im Bereich der ersten Teilmessstrecke 1.1 ist in den Schienenfahrweg 2 eine erste Messeinrichtung zur Erfassung der von einem Rad 5 auf die Schiene 3 ausgeübten Radaufstandskraft F integriert. Die erste Messeinrichtung umfasst zwei an der Schiene 3 angeordnete Querkraftaufnehmer 6, 7, von denen einer am Anfang und der andere am Ende der ersten Teilmessstrecke 1.1 installiert ist. Beispielsweise handelt es dabei um Messaugen oder Dehnmessstreifen, die die von den Rädern 5 in die Schienen 3 induzierten Schubspannungen analog erfassen und in digitale Messsignale umwandeln.

Die Querkraftaufnehmer 6, 7 dienen zum einen der Kraftnebenschlusskorrektur, um Störeinflüsse aus benachbarten Schienenabschnitten zu kompensieren. Zum anderen können die Querkraftaufnehmer 6, 7 als Schalter für den Beginn und das Ende des Messvorgangs der ersten Messeinrichtung eingesetzt werden und/oder zur Achserkennung und Fahrzeugidentifizierung.

Vorzugsweise wird mittels der Querkraftaufnehmer 6, 7 die Fahrgeschwindigkeit v im Bereich der ersten Teilmessstrecke 1.1 ermittelt, die sich auf Basis des bekannten Abstands des Querkraftaufnehmers 6 vom Querkraftaufnehmer 7 in Fahrtrichtung x und der bekannten Zeitdauer T bestimmen lässt, die der Differenz der Überrollzeitpunkte $t_0$ und $t_X$ entspricht (s. Fig. 2a).

Zusätzlich sind im Bereich der ersten Teilmessstrecke 1.1 Kraftaufnehmer 8 zur Erfassung der Radaufstandskraft F vorgesehen, beispielsweise Wägebalken, Wägezellen oder Wägediscs. Um ein über die Länge der Messstrecke 1 möglichst gleichmäßiges Kraftsignal zu erhalten, sind vorzugsweise mehrere in Fahrtrichtung x aufeinanderfolgende Kraftaufnehmer 8 vorgesehen, deren gegenseitiger Abstand in Fahrtsichtung x maximal dem zweifachen Schwellenabstand entspricht, vorzugsweise dem einfachen Schwellenabstand. Im vorliegenden Ausführungsbeispiel liegt jede der beiden Schienen 3 auf Kraftaufnehmern 8 auf, die wiederum auf aufeinanderfolgenden Schwellen 4 gelagert sind.

Die zweite Teilmessstrecke 1.2 besitzt eine Länge L2, die größer ist als die Länge L1 und die mindestens dem 1,2-fachen nominellen Radumfang $U_{nom}$ der Räder 5 der auf dem Schienenfahrweg 2 verkehrenden Fahrzeuge entspricht, vorzugsweise dem 1,5-fachen, höchstvorzugsweise dem 2-fachen. Bei einem Standardraddurchmesser von etwa 1250 mm ergibt sich somit eine Länge L2 von mindestens 4710 mm, vorzugsweise mindestens 5888 mm, höchstvorzugsweise von 7850 mm.

Im Bereich der zweiten Teilmessstrecke 1.2 besitzt die erfindungsgemäße Vorrichtung eine zweite Messeinrichtung zur Erfassung der von einem Rad 5 auf die Schiene 3 ausgeübten Beschleunigung a, die ebenfalls in den Schienenfahrweg 2 integriert ist. Auch die zweite Messeinrichtung umfasst am Anfang und Ende der Schiene 3 installierte Querkraftaufnehmer 9, 10, wobei in der vorliegenden ersten Ausführungsform der in Fahrtrichtung x erste Querkraftaufnehmer 9 dem zweiten Querkraftaufnehmer 7 der ersten Teilmessstrecke 1.1 entspricht, also eine Doppelfunktion innehat. In ihrer gegenständlichen Ausbildung und Funktion entsprechen die Querkraftaufnehmer 9, 10 denen der ersten Teilmessstrecke 1.1, so dass die dortigen Ausführungen entsprechend gelten, insbesondere im Hinblick auf die Möglichkeit einer Kraftnebenschlusskorrektur und Ermittlung der Fahrgeschwindigkeit v im Bereich der zweiten Teilmessstrecke 1.2.

Darüber hinaus sind im Bereich der zweiten Teilmessstrecke 1.2 Beschleunigungsaufnehmer 11 zur Erfassung der Beschleunigung a vorgesehen. Die Beschleunigungsaufnehmer 11 sind jeweils zwischen zwei Schwellen 4 an der Unterseite der Schienen 3 befestigt, woraus sich ein gegenseitiger Abstand der Beschleunigungsaufnehmer 11 in Fahrtrichtung x ergibt, der dem einfachen Schwellenabstand entspricht, aber auch dem zweifachen Schwellenabstand entsprechen kann. Die Beschleunigungsaufnehmer 11 erfassen den Beschleunigungswert bzw. das Beschleunigungssignal der Schiene jeweils an der Stelle, an der der Sensor sitzt.

Die Querkraftaufnehmer 6, 7, 9, 10, Kraftaufnehmer 8 für die Radaufstandskraft F und Beschleunigungsaufnehmer 11 sind mittels Datenleitungen 12 mit einer elektronischen Auswerteeinheit 13 verbunden, in der die Datenspeicherung und Datenverarbeitung stattfindet. Über Funk oder eine weitere Datenleitung 14 werden die Daten eines Messvorgangs an eine übergeordnete zentrale Stelle übermittelt.

Fig. 2a zeigt den zeitlichen Verlauf des von Kraftaufnehmern 8 gemessenen Kraftsignals F bei der Überfahrt über die Teilmessstrecke 1.1. Der von der ersten Messeinrichtung ausgeführte Messvorgang beginnt zum Zeitpunkt $t_0$, definiert durch das Überrollen des Rades 5 über den Querkraftaufnehmer 6, und endet zum Zeitpunkt $t_X$, zu dem das Rad 5 den Querkraftaufnehmer 7 überrollt und damit den Bereich der ersten Teilmesstrecke 1.1 verlässt. Die zwischen den Zeitpunkten $t_0$ und $t_x$ liegende Zeitdauer T entspricht somit der Dauer der Überfahrt über die erste Teilmessstrecke 1.1, deren Länge L1 mindestens dem einfachen nominellen Radumfang $U_{nom}$ entspricht und daher größer ist als der tatsächliche Radumfang $U_{ist}$. Bei bekanntem räumlichem Abstand der Querkraftaufnehmer 6, 7, der bei vorliegender Ausführungsform der Länge L1 der ersten Teilmessstrecke 1.1 entspricht, kann die Fahrgeschwindigkeit v des Schienenfahrzeugs in der ersten Teilmessstrecke 1.1 errechnet werden nach der Beziehung:

$$v = L1 / T \qquad \text{mit } T = t_X - t_0$$

Die Amplitude des Kraftsignals F schwankt in Abhängigkeit der Güte der Lauffläche des Rades 5 mehr oder weniger stark um einen Wert, der dem statischen Lastanteil $F_{stat}$ entspricht. Mit 15 ist ein vom Schwankungsbereich signifikant abweichendes Kraftmaximum bzw. Kraftminimum bezeichnet, das aufgrund seiner Steigung und Höhe auf eine Unrundheit an der Lauffläche des Rades 5 schließen lässt.

In Fig. 2b ist der zeitliche Verlauf des von den Beschleunigungsaufnehmern 11 gemessenen Beschleunigungssignals a bei der Überfahrt über die zweite Teilmessstrecke 1.2 dargestellt. Das Überrollen des Querkraftaufnehmers 9 vom Rad 5 entspricht dem Zeitpunkt $t_0$, mit dem der Messvorgang durch die zweite Messeinrichtung im Bereich der zweiten Teilmessstrecke 1.2 beginnt. Das Überrollen des Querkraftaufnehmers 10 durch dasselbe Rad 5 definiert den Zeitpunkt $t_x$, der gleichzeitig das Ende des Messvorgangs darstellt. Der zwischen den Zeitpunkten $t_0$ und $t_x$ liegende Zeitabschnitt T entspricht wiederum der Dauer der Überfahrt über die zweite Teilmessstrecke 1.2, deren Länge L2 größer ist als die Länge L1 der ersten Teilmessstrecke und im vorliegenden Fall dem zweifachen nominellen Radumfang $U_{nom}$ entspricht. Bei bekanntem räumlichem Abstand der Querkraftaufnehmer 9, 10, der bei vorliegender Ausführungsform der Länge L2 der zweiten Teilmessstrecke 1.2 entspricht, ergibt sich die Fahrgeschwindigkeit v des Schienenfahrzeugs in der zweiten Teilmessstrecke 1.2 entsprechend obiger Ausführungen.

Die Amplitude des Beschleunigungssignals a schwankt in Abhängigkeit der Güte der Lauffläche des Rades 5 mehr oder weniger stark um den Wert Null. Mit dem Kraftmaximum bzw. Kraftminimum 15 des Kraftsignalverlaufs F(t) (Fig. 2a) korrespondiert ein vom Schwankungsbereich signifikant abweichendes Beschleunigungsmaximum 16 im Beschleunigungssignalverlauf a(t), das auf dieselbe Unrundheit an der Lauffläche des Rades 5 zurückzuführen ist. Der Zeitpunkt des ersten Auftretens des Beschleunigungsmaximums 16 ist in Fig. 2b mit $t_1$ bezeichnet. Aufgrund der vorgegebenen Länge L2 der zweiten Teilmessstrecke 1.2 rollt das Rad 5 bei anhaltendem Messvorgang mit einem Teil seines Umfangs oder bei entsprechender Länge von L2 mit dem vollständigen Umfang ein zweites Mal auf der zweiten Teilmessstrecke 1.2 ab. Mit dem erneuten Abrollen des Rades 5 auf der Schiene 3 wird daher ab diesem Zeitpunkt ein Beschleunigungssignalverlauf a(t) erzeugt, der in seinen charakteristischen Merkmalen dem des bisherigen Beschleunigungssignalverlaufs a(t) entspricht. Die auffälligste Wiederholung stellt dabei das Beschleunigungsmaximum bzw. Beschleunigungsminimum 16' zum Zeitpunkt $t_2$ dar. Die zwischen den Zeitpunkten $t_1$ und $t_2$ liegende Zeitdauer $\Delta t$ entspricht der Dauer, mit der das Rad 5 einmal über seinen tatsächlichen Umfang $U_{ist}$ abrollt. In Verbindung mit der bekannten Fahrgeschwindigkeit v lässt sich daraus der Ist-Umfang $U_{ist}$ des Rades 5 ermitteln nach der Beziehung:

$$U_{ist} = v * \Delta t \qquad \text{mit } \Delta t = t_2 - t_1$$

Für die auf den Ist-Umfang $U_{ist}$ bezogene Auswertung des Kraftsignalverlaufs F(t), beispielsweise bei der Darstellung der Radunrundheiten in Polardiagrammen oder der Ermittlung deren Periodizität bzw. Wellenlänge, wird der in der zweiten Teilmessstrecke 1.2 ermittelte Zeitabschnitt $\Delta t$ bzw. der damit korrespondierende Ist-Radumfang $U_{ist}$ auf den mittels der ersten Teilmessstrecke 1.1 aufgenommenen Kraftsignalverlauf F(t) übertragen, was mit Pfeil 17 angedeutet ist. Der innerhalb des Zeitabschnitts $\Delta t$ bzw. Ist-Umfangs $U_{ist}$ liegende Teil des Kraftsignalverlaufs F(t) wird anschließend der weiteren Auswertung zur Ermittlung der Unrundheiten des Rades 5 zugrunde gelegt.

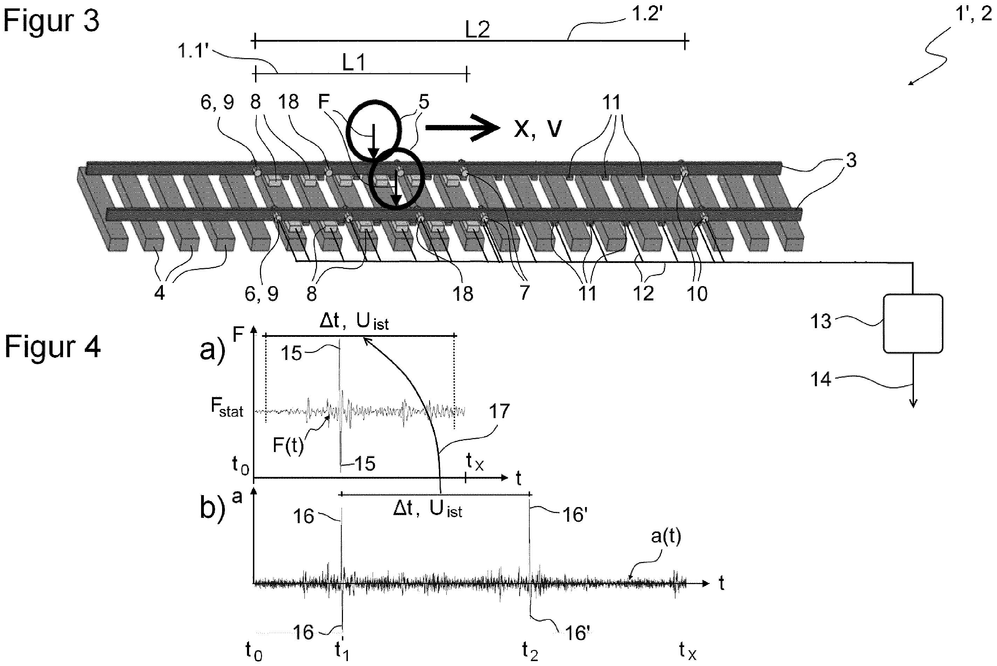

Eine weitere, zweite Ausführungsform der Erfindung wird nachstehend anhand der Fig. 3, 4a und 4b erläutert. Die in Fig. 3 dargestellte Messtrecke 1' umfasst ebenfalls eine erste Teilmessstrecke 1.1', die weitestgehend der ersten Teilmessstrecke 1.1 der ersten Ausführungsform entspricht, und eine zweite Teilmessstrecke 1.2', die weitestgehend der zweiten Teilmessstrecke 1.2 der ersten Ausführungsform entspricht. Um Wiederholungen zu vermeiden wird hinsichtlich des Schienenfahrwegs 2, der beiden Messeinrichtungen, der Querkraftaufnehmer 6, 7, 9, 10, Kraftaufnehmer 8, Beschleunigungsaufnehmer 11, Datenleitungen 12, Auswerteeinheit 13 etc. auf die dort gemachten Ausführungen verwiesen, die entsprechend gelten.

Unterschiede zur vorbeschriebenen ersten Ausführungsform ergeben sich aus der Anzahl an Querkraftaufnehmern im Bereich der ersten Teilmessstrecke 1.1', wo bei der zweiten Ausführungsform gemäß Fig. 3 zwischen den endseitigen Querkraftaufnehmern 6, 7 zusätzliche Querkraftaufnehmer 18 im zweifachen Schwellenabstand angeordnet sind.

Ein weiterer Unterschied besteht in der relativen Anordnung der ersten Teilmessstrecke 1.1' und zweiten Teilmessstrecke 1.2' zueinander. Während bei der ersten Ausführungsform gemäß Fig. 1 die beiden Teilmessstrecken 1.1 und 1.2 in Fahrtrichtung x aufeinanderfolgen, überlappen bei der in Fig. 3 dargestellten Ausführungsform die erste Teilmessstrecke 1.1' und zweite Teilmessstrecke 1.2'. Dabei besitzen die erste Teilmessstrecke 1.1' und die zweite Teilmessstrecke 1.2' einen gemeinsamen Anfang, der durch den Querkraftaufnehmer 6 bzw. 9 definiert ist. Die erste Teilmessstrecke 1.1' endet nach der Länge L1 mit dem Querkraftaufnehmer 7, die zweite Teilmessstrecke 1.2' setzt sich fort bis zum Querkraftaufnehmer 10, der das Ende der zweiten Teilmessstrecke 1.2' definiert.

Wie aus den Fig. 4a und 4b hervorgeht, beginnt zum Zeitpunkt $t_0$ gleichzeitig sowohl das Erfassen der Radaufstandskraft F mittels der Kraftaufnehmer 8 als auch das Erfassen der Beschleunigung a mittels der Beschleunigungsaufnehmer 11. Dementsprechend wird der Kraftsignalverlauf F(t) über die Länge L1 zeitgleich mit dem Beschleunigungssignalverlauf a(t) aufgenommen.

Die Auswertung des Kraftsignalverlaufs F(t) und des Beschleunigungssignalverlaufs a(t) erfolgt analog zur vorbeschriebenen ersten Ausführungsform, indem anhand charakteristischer Merkmale im Beschleunigungssignalverlauf a(t) wie zum Beispiel Beschleunigungsmaxima bzw. Beschleunigungsminima 16, 16' eine Wiederholung des Beschleunigungssignalverlaufs a(t) festgestellt und dem vorausgehenden Beschleunigungssignalverlauf a(t) bis zur Wiederholung eine Zeitspanne $\Delta t$ zugeordnet wird. Bei bekannter Fahrgeschwindigkeit v lässt sich daraus der tatsächliche Umfang $U_{ist}$ des Rades 5 ermitteln.

Mit Hilfe der so ermittelten Zeitspanne $\Delta t$ bzw. des Ist-Radumfangs $U_{ist}$ wird anschließend analog dem Vorgehen bei der ersten Ausführungsform der Erfindung ein Abschnitt aus dem Kraftsignalverlauf F(t) ausgewählt, der exakt dem Ist-Radumfang $U_{ist}$ entspricht und der die Basis für Polardiagramme, Aussagen zur Periodizität, Wellenlänge und dergleichen bildet.

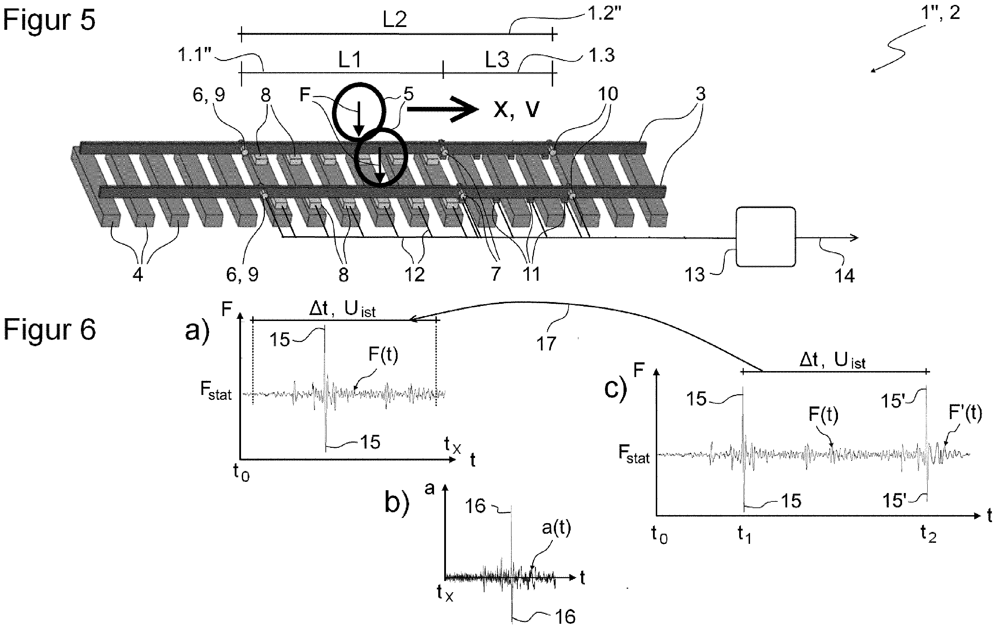

Gegenstand der Fig. 5, 6a, 6b und 6c ist eine dritte Ausführungsform der Erfindung, bei der die Messstrecke 1" wiederum eine erste Teilmessstrecke 1.1" zur Ermittlung der Radaufstandskraft F über die Länge L1 umfasst. Die Teilmessstrecke 1.1" mit der dazugehörigen ersten Messeinrichtung entspricht der bereits unter den Fig. 1, 2a und 2b beschriebenen ersten Teilmessstrecke 1.1, so dass zur Vermeidung von Wiederholungen auf die dortigen Ausführungen Bezug genommen wird.

Unterschiede ergeben sich im Bereich der zweiten Teilmessstrecke 1.2", die sich bei der dritten Ausführungsform zusammensetzt aus der ersten Teilmessstrecke 1.1" der Länge L1 und einer Restmessstrecke 1.3 der Länge L3, die zusammen die Länge L2 der zweiten Teilmessstrecke 1.2" ergeben.

Die Restmessstrecke 1.3 ist analog der zweiten Teilmessstrecke 1.2 der unter den Fig. 1, 2a und 2b beschriebenen Ausführungsform aufgebaut, mit Querkraftaufnehmern 7, 10 am Anfang und Ende der Restmessstrecke 1.3 und zwischen den Schwellen 4 angeordneten Beschleunigungsaufnehmern 11. Im Vergleich mit der Länge L1 der ersten Teilmessstrecke 1.1" und der Länge L2 der zweiten Teilmessstrecke 1.2" zeichnet sich die Restmessstrecke 1.3 durch eine geringere Länge L3 aus.

Bei der Überfahrt eines Schienenfahrzeugs über die Messstrecke 1" wird im Bereich der ersten Teilmessstrecke 1.1" über die Länge L1 ein Kraftsignalverlauf F(t) entsprechend Fig. 6a aufgenommen. Mit Erreichen des Endes der ersten Teilmessstrecke 1.1" und Beginn der Restmessstrecke 1.3 zum Zeitpunkt $t_X$ beginnt die Erfassung des Beschleunigungssignals über die Länge L3 der Restmessstrecke 1.3, was den in Fig. 6b dargestellten Beschleunigungsverlauf a(t) mit den Beschleunigungsmaxima bzw. Beschleunigungsminima 16 ergibt.

Für die weitere Auswertung wird der Beschleunigungssignalverlauf a(t) transformiert in einen rechnerischen Kraftsignalverlauf F'(t), der mit dem in der ersten Teilmessstrecke 1.1" ermittelten Kraftsignalverlauf F(t) kombiniert wird. Das Ergebnis nach Transformation und Addition entspricht dem Kraftsignalverlauf F(t) und F'(t) wie in Fig. 6c dargestellt, der sich über die gesamte Länge L2 der zweiten Teilmessstrecke 1.2" erstreckt. Man erkennt die Kraftmaxima 15, 15' zum Zeitpunkt $t_1$ und Zeitpunkt $t_2$, die jeweils auf dieselbe Unrundheit des Rades 5 zurückgehen und damit Beginn und Ende des Ist-Radumfangs $U_{ist}$ sowie die Zeitspanne $\Delta t$ markieren.

Der auf diese Weise ermittelte Ist-Radumfang $U_{ist}$ bzw. die so ermittelte Zeitdauer $\Delta t$ wird wie durch Pfeil 17 angedeutet in den Kraftsignalverlauf F(t) nach Fig. 6a übertragen und definiert dort einen Abschnitt des Kraftsignalverlaufs F(t), der exakt dem Ist-Umfang $U_{ist}$ des Rades 5 entspricht und der wie bei den zuvor beschriebenen Ausführungsformen der Erfindung die Basis der weiteren Auswertung bildet.

Mit der erfindungsgemäßen Vorrichtung und dem erfindungsgemäßen Verfahren wird insgesamt der Ansatz verfolgt, die Messstrecken so kurz wie möglich, mit möglichst wenig Eingriffen in das Gleisbett bzw. den Untergrund und daher möglichst kosteneffizient zu gestalten. Durch die Anordnung der Messstrecken und der Kombination der unterschiedlichen Sensoren, nämlich Kraftaufnehmer unter der Schiene (Vertikalkräfte, Radaufstandskräfte), Querkraftaufnehmer in der Schiene und Beschleunigungsaufnehmer, erfolgt die Ermittlung der Radaufstandskräfte und Unrundheiten von Rädern aber dennoch äußerst genau und zuverlässig. Die auf einer bezüglich eines vollen Radumfangs minimal erforderlichen Teilmessstrecke gewonnenen Erkenntnisse werden jeweils durch eine zweite Teilmessstrecke und alternative Sensoren überprüft.

**Patentansprüche**

1. Vorrichtung zur Ermittlung von Unrundheiten eines Rades (5) eines schienengebundenen Fahrzeuges bei der Überfahrt einer als Messstrecke (1, 1') ausgebildeten Schiene (3) in Fahrtrichtung x mit der Fahrgeschwindigkeit v, mit

- einer ersten Teilmessstrecke (1.1, 1.1'), die sich über eine Länge L1 erstreckt und eine erste Messeinrichtung mit Kraftaufnehmern (8) zur Erfassung der Aufstandskraft F des Rades (5) über die Länge L1 aufweist, und einer zweiten Teilmessstrecke (1.2, 1.2') , die sich über eine Länge L2 erstreckt und eine zweite Messeinrichtung zur Ermittlung des Ist-Umfangs $U_{ist}$ des Rades (5) aufweist,

- wobei die Länge L1 der ersten Teilmessstrecke (1.1, 1.1') mindestens dem nominellen Umfang $U_{nom}$ des Rades (5) entspricht, und

- einer elektronischen Auswerteeinheit (13) zur Entgegennahme und Verarbeitung der mit der ersten Messeinrichtung und zweiten Messeinrichtung erfassten Messwerte, wobei;

- die Länge L2 der zweiten Teilmessstrecke (1.2, 1.2') größer ist als die Länge L1 der ersten Teilmessstrecke (1.1, 1.1') und

- die zweite Messeinrichtung gebildet ist

- - von Beschleunigungsaufnehmern (11) zur Erfassung der vom Rad (5) auf die Schiene (3) ausgeübten Beschleunigung a über die Länge L2 der zweiten Teilmessstrecke (1.2, 1.2') und

- die Auswerteeinheit (13) dafür ausgelegt ist, aus den Messwerten der ersten Messeinrichtung einen kontinuierlichen Kraftsignalverlauf F(t) über die Länge L1 zu erstellen und

- aus den Messwerten der zweiten Messeinrichtung einen weiteren Signalverlauf über die Länge L2, aus dem auf Basis der Fahrgeschwindigkeit v der Ist-Umfang $U_{ist}$ des Rades (5) bzw. die Zeitdauer $\Delta t$, die dem Abrollen des Ist-Radumfangs $U_{ist}$ auf der zweiten Teilmessstrecke (1.2, 1.2') entspricht, ableitbar ist,

- wobei der Ermittlung der Unrundheiten des Rades (5) ein Abschnitt aus dem Kraftsignalverlauf F(t) zugrunde gelegt ist, der dem Ist-Umfang $U_{ist}$ bzw. der Zeitdauer $\Delta t$ entspricht.

2. Vorrichtung zur Ermittlung von Unrundheiten eines Rades (5) eines schienengebundenen Fahrzeuges bei der Überfahrt einer als Messstrecke (1") ausgebildeten Schiene (3) in Fahrtrichtung x mit der Fahrgeschwindigkeit v, mit

- einer ersten Teilmessstrecke (1.1"), die sich über eine Länge L1 erstreckt und eine erste Messeinrichtung mit Kraftaufnehmern (8) zur Erfassung der Aufstandskraft F des Rades (5) über die Länge L1 aufweist, und einer zweiten Teilmessstrecke (1.2"), die sich über eine Länge L2 erstreckt und eine zweite Messeinrichtung zur Ermittlung des Ist-Umfangs $U_{ist}$ des Rades

(5) aufweist,

- wobei die Länge L1 der ersten Teilmessstrecke (1.1") mindestens dem nominellen Umfang $U_{nom}$ des Rades (5) entspricht, und

- einer elektronischen Auswerteeinheit (13) zur Entgegennahme und Verarbeitung der mit der ersten Messeinrichtung und zweiten Messeinrichtung erfassten Messwerte, wobei;

- die Länge L2 der zweiten Teilmessstrecke (1.2") um die Länge L3 einer Restmessstrecke (1.3) größer ist als die Länge L1 der ersten Teilmessstrecke (1.1"), wobei die erste Teilmessstrecke (1.1") ganz mit der zweiten Teilmessstrecke (1.2") überlappt, und

- die zweite Messeinrichtung gebildet ist

- - von Kraftaufnehmern (8) zur Erfassung der Aufstandskraft F über eine erste Teillänge der zweiten Teilmessstrecke (1.2"), die der ersten Teilmessstrecke (1.1") entspricht, und

- - von Beschleunigungsaufnehmern (11) zur Erfassung der vom Rad (5) auf die Schiene (3) ausgeübten Beschleunigung a über eine zweite Teillänge der zweiten Teilmessstrecke (1.2"), die der Restmessstrecke (1.3) entspricht, wobei erste Teillänge und zweite Teillänge zusammen die Länge L2 der zweiten Teilmessstrecke (1.2") ergeben, und

- die Auswerteeinheit (13) dafür ausgelegt ist, aus den Messwerten der ersten Messeinrichtung einen Kraftsignalverlauf F(t) über die Länge L1 zu erstellen und aus den Messwerten der zweiten Messeinrichtung einen weiteren Signalverlauf über die Länge L2, aus dem auf Basis der Fahrgeschwindigkeit v der Ist-Umfang $U_{ist}$ des Rades (5) bzw. die Zeitdauer $\Delta t$, die dem Abrollen des Ist-Radumfangs $U_{ist}$ auf der zweiten Teilmessstrecke (1.2") entspricht, ableitbar ist,

- wobei der Ermittlung der Unrundheiten des Rades (5) ein Abschnitt aus dem Kraftsignalverlauf F(t) zugrunde gelegt ist, der dem Ist-Umfang $U_{ist}$ bzw. der Zeitdauer $\Delta t$ entspricht.

3. Vorrichtung nach Anspruch 1 oder 2, **dadurch gekennzeichnet, dass** die Länge der von erster Teilmesstrecke (1.1, 1.1', 1.1") und zweiter Teilmesstrecke (1.2, 1.2', 1.2") gebildeten Messtrecke (1, 1', 1") mindestens dem 1, 2-fachen nominellen Umfang $U_{nom}$ des Rades (5) entspricht, vorzugsweise mindestens dem 1,5-fachen nominellen Umfang $U_{nom}$, höchstvorzugsweise mindestens dem 2-fachen nominellen Umfang $U_{nom}$.

4. Vorrichtung nach Anspruch 1 oder 3, **dadurch ge-**

**kennzeichnet, dass** die erste Teilmessstrecke (1.1) und zweite Teilmessstrecke (1.2) in x-Richtung aufeinanderfolgen.

5. Vorrichtung nach einem der Ansprüche 1 bis 3, **dadurch gekennzeichnet, dass** die erste Teilmessstrecke (1.1', 1.1") ganz oder teilweise mit der zweiten Teilmessstrecke (1.2, 1.2') in Fahrtrichtung x überlappt.

6. Vorrichtung nach einem der Ansprüche 1 bis 5, **dadurch gekennzeichnet, dass** der Abstand benachbarter Kraftaufnehmer (8) der ersten Teilmessstrecke (1.1, 1.1', 1.1") zwischen 300 mm und 1000 mm liegt.

7. Vorrichtung nach einem der Ansprüche 1 bis 6, **dadurch gekennzeichnet, dass** der Abstand benachbarter Beschleunigungsaufnehmer (11) der zweiten Teilmessstrecke (1.2, 1.2', 1.2") zwischen 300 mm und 2000 mm liegt.

8. Vorrichtung nach einem der Ansprüche 1 bis 7, **dadurch gekennzeichnet, dass** die die Messstrecke (1, 1', 1") bildende Schiene (3) auf Schwellen (4) gelagert ist und der Abstand der Kraftaufnehmer (8) und/oder Beschleunigungsaufnehmer (11) in x-Richtung dem Abstand der Schwellen (4) entspricht.

9. Vorrichtung nach einem der Ansprüche 1 bis 8, **dadurch gekennzeichnet, dass** am Anfang und/oder Ende der ersten Teilmessstrecke (1.1, 1.1', 1.1") und/oder zweiten Teilmessstrecke (1.2, 1.2', 1.2") jeweils ein Querkraftaufnehmer (6, 7, 9, 10) oder Schienenschalter angeordnet ist.

10. Verfahren zur Ermittlung von Unrundheiten eines Rades (5) eines schienengebundenen Fahrzeuges bei der Überfahrt einer als Messstrecke (1, 1') ausgebildeten Schiene (3) in Fahrtrichtung x mit der Fahrgeschwindigkeit v, das die folgenden Schritte umfasst:

    a) Kontinuierliches Erfassen der vom Rad (5) auf die Schiene (3) ausgeübten Aufstandskraft F über die Länge L1 einer ersten Teilmessstrecke (1.1, 1.1'), die mindestens dem nominellen Umfang $U_{nom}$ des Rades entspricht,
    b) Kontinuierliches Erfassen der vom Rad (5) auf die Schiene (3) ausgeübten Beschleunigung a über die Länge L2 einer zweiten Teilmessstrecke (1.2, 1.2'), wobei die Länge L2 größer ist als die Länge L1,
    c) Ermitteln des Ist-Umfangs $U_{ist}$ des Rades (5) bzw. der Zeitdauer $\Delta t$, die dem Abrollen des Ist-Radumfangs $U_{ist}$ auf der zweiten Teilmessstrecke (1.2, 1.2') entspricht, auf Basis der Fahrgeschwindigkeit v, durch Auswertung des unter Schritt b) erfassten Signalverlaufs,
    d) Ermitteln von Unrundheiten des Rades (5) durch Auswerten des unter Schritt a) erfassten Kraftsignalverlaufs über die Länge des unter Schritt c) ermittelten Ist-Umfangs $U_{ist}$ bzw. der Zeitdauer $\Delta t$.

11. Verfahren zur Ermittlung von Unrundheiten eines Rades (5) eines schienengebundenen Fahrzeuges bei der Überfahrt einer als Messstrecke (1") ausgebildeten Schiene (3) in Fahrtrichtung x mit der Fahrgeschwindigkeit v, wobei sich die Messstrecke (1") aus einer ersten Teilmessstrecke (1.1") der Länge L1 und einer zweiten Teilmessstrecke (1.2") der Länge L2 zusammensetzt, die in Fahrtrichtung x miteinander überlappen, wobei die Länge L2 der zweiten Teilmessstrecke (1.2") um die Länge L3 einer Restmessstrecke (1.3) größer ist als die Länge L1 der ersten Teilmessstrecke (1.2"), das die folgenden Schritte umfasst:

    a) Kontinuierliches Erfassen der vom Rad (5) auf die Schiene (3) ausgeübten Aufstandskraft F über die Länge L1 der ersten Teilmessstrecke (1.1"), die mindestens dem nominellen Umfang $U_{nom}$ des Rades entspricht, wobei die erste Teilmessstrecke (1.1") einer ersten Teillänge der zweiten Teilmessstrecke (1.2") entspricht,
    b) Kontinuierliches Erfassen der vom Rad (5) auf die Schiene (3) ausgeübten Beschleunigung a über eine zweite Teillänge der zweiten Teilmessstrecke (1.2"), die der Restmessstrecke (1.3) entspricht, wobei die erste Teillänge und zweite Teillänge zusammen die Länge L2 der zweiten Teilmessstrecke (1.2") ergeben,
    c) Transformieren des in Schritt b) über die zweite Teillänge der zweiten Teilmessstrecke (1.2") kontinuierlich erfassten Verlaufs der Beschleunigung a in einen Kraftsignalverlauf und Kombinieren des dadurch erhaltenen Kraftsignalverlaufs mit dem Verlauf der in Schritt a) über die erste Teillänge der zweiten Teilmessstrecke (1.2") kontinuierlich erfassten Aufstandskraft F.
    d) Ermitteln des Ist-Umfangs $U_{ist}$ des Rades (5) bzw. der Zeitdauer $\Delta t$, die dem Abrollen des Ist-Radumfangs $U_{ist}$ auf der zweiten Teilmessstrecke (1.2") entspricht, auf Basis der Fahrgeschwindigkeit v, durch Auswertung des unter Schritt c) erhaltenen Signalverlaufs,
    e) Ermitteln von Unrundheiten des Rades (5) durch Auswerten des unter Schritt a) erfassten Kraftsignalverlaufs über die Länge des unter Schritt d) ermittelten Ist-Umfangs $U_{ist}$ bzw. der Zeitdauer $\Delta t$.

12. Verfahren nach Anspruch 10, **dadurch gekennzeichnet, dass** die Schritte a) und b) zeitlich aufeinander folgen.

**13.** Verfahren nach Anspruch 10 oder 11, **dadurch gekennzeichnet, dass** die Schritte a) und b) zeitlich ganz oder teilweise parallel ausgeführt werden.

**14.** Verfahren nach einem der Ansprüche 10 bis 13, **dadurch gekennzeichnet, dass** die Auswertung des in Schritt b) erfassten Signalverlaufs zur Ermittelung des Ist-Umfangs $U_{ist}$ des Rades (5) bzw. der Zeitdauer $\Delta t$ gemäß Schritt c) durch Autokorrelation erfolgt.

## Claims

**1.** An apparatus for ascertaining out-of-roundnesses of a wheel (5) of a railbound vehicle when passing over a rail (3) designed as a measuring section (1, 1') in the direction of travel x at the travel velocity v, comprising

    - a first measuring subsection (1 .1, 1.1'), which extends over a length L1, and includes a first measuring device having force transducers (8) for detecting the contact force F of the wheel (5) over the length L1, and comprising a second measuring subsection (1.2, 1.2') , which extends over a length L2 and includes a second measuring device for ascertaining the actual circumference $U_{ist}$ of the wheel (5),
    - the length L1 of the first measuring subsection (1 .1, 1.1') corresponding at least to the nominal circumference $U_{nom}$ of the wheel (5); and comprising
    - an electronic evaluation unit (13) for receiving and processing the measured values detected with the aid of the first measuring device and the second measuring device;
    - the length L2 of the second measuring subsection (1.2, 1.2') being greater than the length L1 of the first measuring subsection (1.1, 1.1'); and
    - the second measuring device being formed from

        - - acceleration transducers (11) for detecting the acceleration a applied by the wheel (5) to the rail (3) over the length L2 of the second measuring subsection (1.2, 1.2'); and

    - the evaluation unit (13) being designed to generate a continuous force signal form F(t) from the measured values of the first measuring device over the length L1; and to generate
    - a further signal form from the measured values of the second measuring device over the length L2, from which, based on the travel velocity v, the actual circumference $U_{ist}$ of the wheel (5) or the

time period $\Delta t$ corresponding to the rolling of the actual wheel circumference $U_{ist}$ on the second measuring subsection (1.2, 1.2') may be derived;
    - the ascertainment of the out-of-roundnesses of the wheel (5) being based on a segment of the force signal form F(t), which corresponds to the actual circumference $U_{ist}$ or the time period $\Delta t$.

**2.** An apparatus for ascertaining out-of-roundnesses of a wheel (5) of a railbound vehicle when passing over a rail (3) designed as a measuring section (1") in the direction of travel x at the travel velocity v, comprising

    - a first measuring subsection (1.1"), which extends over a length L1, and includes a first measuring device having force transducers (8) for detecting the contact force F of the wheel (5) over the length L1, and comprising a second measuring subsection (1.2") , which extends over a length L2 and includes a second measuring device for ascertaining the actual circumference $U_{ist}$ of the wheel (5),
    - the length L1 of the first measuring subsection (1.1''') corresponding at least to the nominal circumference $U_{nom}$ of the wheel (5); and
    - an electronic evaluation unit (13) for receiving and processing the measured values detected with the aid of the first measuring device and the second measuring device;
    - the length L2 of the second measuring subsection (1.2") being greater than the length L1 of the first measuring subsection (1.1") by the length L3 of a remaining measuring section (1.3);
    - the first measuring subsection (1.1") completely overlapping the second measuring subsection (1.2"); and
    - the second measuring device being formed from

        - - force transducers (8) for detecting the contact force F over a first partial length of the second measuring subsection (1.2"), which corresponds to the first measuring subsection (1.1"); and
        - - acceleration transducers (11) for detecting the acceleration a applied by the wheel (5) to the rail (3) over a second partial length of the second measuring subsection (1.2"), which corresponds to the remaining measuring section (1.3), the first partial length and the second partial length together resulting in the length L2 of the second measuring subsection (1.2"); and

    - the evaluation unit (13) being designed to generate a force signal form (F(t) from the measured values of the first measuring device over the length L1 and a further signal form from the measured values of the second measuring device over the length L2, from which, based on the travel velocity v, the actual circumference $U_{ist}$ of the wheel (5) or the time period $\Delta t$ corresponding to the rolling of the actual wheel circumference $U_{ist}$ on the second measuring subsection (1.2") may be derived;
- the ascertainment of the out-of-roundnesses of the wheel (5) being based on a segment of the force signal form F(t), which corresponds to the actual circumference $U_{ist}$ or the time period $\Delta t$.

3. The apparatus according to Claim 1 or 2, **characterized in that** the length of the first measuring section (1, 1', 1") formed by the first measuring subsection (1.1, 1.1', 1.1") and the second measuring subsection (1.2, 1.2', 1.2") corresponds at least to 1, 2 times the nominal circumference $U_{nom}$ of the wheel (5), preferably at least 1.5 times the nominal circumference $U_{nom}$, most preferably at least 2 times the nominal circumference $U_{nom}$.

4. The apparatus according to Claim 1 or 3, **characterized in that** the first measuring subsection (1.1) and the second measuring subsection (1.2) follow each other in the x direction.

5. The apparatus according to one of Claims 1 through 3, **characterized in that** the first measuring subsection (1.1', 1.1") completely or partially overlaps the second measuring subsection (1.2, 1.2') in the direction of travel x.

6. The apparatus according to one of Claims 1 through 5, **characterized in that** the spacing of adjacent force transducers (8) of the first measuring subsection (1.1, 1.1', 1.1") is between 300 mm and 1,000 mm.

7. The apparatus according to one of Claims 1 through 6, **characterized in that** the spacing of adjacent acceleration transducers (11) of the second measuring subsection (1.2, 1.2', 1.2") is between 300 mm and 2,000 mm.

8. The apparatus according to one of Claims 1 through 7, **characterized in that** the rail (3) forming the measuring section (1, 1', 1") is supported on ties (4), and the spacing of the force transducers (8) and/or acceleration transducers (11) corresponds to the spacing of the ties (4) in the x direction.

9. The apparatus according to one of Claims 1 through 8, **characterized in that** a transverse force transducer (6, 7, 9, 10) or track switch is arranged in each case at the beginning or end of the first measuring subsection (1.1, 1.1', 1.1") and/or second measuring subsection (1.2, 1.2', 1.2").

10. A method for ascertaining out-of-roundnesses of a wheel (5) of a railbound vehicle when passing over a rail (3) designed as a measuring section (1, 1') in the direction of travel x at the travel velocity v, comprising the following steps:

   a) Continuously detecting the contact force F applied by the wheel (5) to the rail (3) over the length L1 of a first measuring subsection (1.1, 1.1'), which corresponds at least to the nominal circumference $U_{nom}$ of the wheel;
   b) Continuously detecting the acceleration a applied by the wheel (5) to the rail (3) over the length L2 of a second measuring subsection (1.2, 1.2'), the length L2 being greater than the length L1;
   c) Ascertaining the actual circumference $U_{ist}$ of the wheel (5) or the time period $\Delta t$ corresponding to the rolling of the actual circumference $U_{ist}$ on the second measuring subsection (1.2, 1.2'), based on the travel velocity v, by evaluating the signal form detected under step b);
   d) Ascertaining out-of-roundnesses of the wheel (5) by evaluating the force signal form detected under step a) over the length of the actual circumference $U_{ist}$ or the time period $\Delta t$ ascertained under step c).

11. The method for ascertaining out-of-roundnesses of a wheel (5) of a railbound vehicle when passing over a rail (3) designed as a measuring section (1") in the direction of travel x at the travel velocity v, the measuring section (1") being made up of a first measuring subsection (1.1") of the length L1 and a second measuring subsection (1.2") of the length L2, which overlap each other in the direction of travel x, the length L2 of the second measuring subsection (1.2") being greater than the length L1 of the first measuring subsection (1.2") by the length L3 of a remaining measuring section (1.3), comprising the following steps:

   a) Continuously detecting the contact force F applied by the wheel (5) to the rail (3) over length L1 of the first measuring subsection (1.1"), which corresponds at least to the nominal circumference $U_{nom}$ of the wheel, the first measuring subsection (1.1") corresponding to a first partial length of the second measuring subsection (1.2");
   b) Continuously detecting the acceleration a applied by the wheel (5) to the rail (3) over a second partial length of the second measuring subsection (1.2"), which corresponds to the remaining measuring section (1.3), the first partial length and the second partial length together resulting in the length L2 of the second measuring subsection (1.2"); and

c) Transforming the form of the acceleration a detected continuously over the second partial length of the measuring subsection (1.2") in step b) into a force signal form, and combining the force signal form obtained thereby with the form of contact force F detected continuously over the first partial length of the second measuring subsection (1.2") in step a);.

d) Ascertaining the actual circumference $U_{ist}$ of the wheel (5) or the time period $\Delta t$ corresponding to the rolling of the actual wheel circumference $U_{ist}$ on the second measuring subsection (1.2"), based on the travel velocity v, by evaluating the signal form detected under step c);

e) Ascertaining out-of-roundnesses of the wheel (5) by evaluating the force signal form detected under step a) over the length of the actual circumference $U_{ist}$ or the time period $\Delta t$ ascertained under step d).

**12.** The method according to Claim 10, **characterized in that** steps a) and b) follow each other over time.

**13.** The method according to Claim 10 or 11, **characterized in that** steps a) and b) are carried out completely or partially in parallel over time.

**14.** The method according to one of Claims 10 through 13, **characterized in that** the evaluation of the signal form detected in step b) for ascertaining the actual circumference $U_{ist}$ of the wheel (5) or the time period $\Delta t$ according to step c) takes place by means of autocorrelation.

**Revendications**

**1.** Dispositif pour déterminer les faux-ronds d'une roue (5) d'un véhicule sur rails lors du passage d'un rail (3) réalisé sous la forme d'une section de mesure (1, 1') dans le sens de la marche x à la vitesse de marche v, comprenant

- une première section de mesure partielle (1.1, 1.1'), qui s'étend sur une longueur L1 et présente un premier appareil de mesure avec des capteurs de force (8) pour détecter la force d'appui F de la roue (5) sur la longueur L1, et une deuxième section de mesure partielle (1.2, 1.2'), qui s'étend sur une longueur L2 et présente un deuxième appareil de mesure pour déterminer la circonférence réelle $U_{ist}$ de la roue (5),

- la longueur L1 de la première section de mesure partielle (1.1, 1. 1') correspondant au moins à la circonférence nominale $U_{nom}$ de la roue (5), et

- une unité d'évaluation électronique (13) pour recevoir et traiter les valeurs de mesure du premier appareil de mesure et du deuxième appareil de mesure,

dans lequel

- la longueur L2 de la deuxième section de mesure partielle (1.2, 1.2') est supérieure à la longueur L1 de la première section de mesure partielle (1.1, 1.1') et

- le deuxième appareil de mesure est formé

- - par des capteurs d'accélération (11) pour détecter l'accélération a exercée par la roue (5) sur le rail (3) sur la longueur L2 de la deuxième section de mesure partielle (1.2, 1.2') et

- l'unité d'évaluation (13) est conçue pour produire, à partir des valeurs de mesure du premier appareil de mesure, une courbe continue de signal de force F(t) sur la longueur L1 et

- à partir des valeurs de mesure du deuxième appareil de mesure, une autre courbe de signal sur la longueur L2, à partir de laquelle il est possible de déduire, sur la base de la vitesse de marche v, la circonférence réelle $U_{ist}$ de la roue (5) ou la période de temps $\Delta t$ qui correspond au roulement de la circonférence réelle de la roue $U_{ist}$ sur la deuxième section de mesure partielle (1.2, 1.2'),

- la détermination des faux-ronds de la roue (5) étant basée sur un segment de la courbe du signal de force F(t) qui correspond à la circonférence réelle $U_{ist}$ ou à la période de temps $\Delta t$.

**2.** Dispositif pour déterminer les faux-ronds d'une roue (5) d'un véhicule sur rails lors du passage d'un rail (3) réalisé sous la forme d'une section de mesure (1") dans le sens de la marche x à la vitesse de marche v, comprenant

- une première section de mesure partielle (1.1"), qui s'étend sur une longueur L1 et présente un premier appareil de mesure avec des capteurs de force (8) pour détecter la force d'appui F de la roue (5) sur la longueur L1, et une deuxième section de mesure partielle (1.2") qui s'étend sur une longueur L2 et présente un deuxième appareil de mesure pour déterminer la circonférence réelle $U_{ist}$ de la roue (5),

- dans lequel la longueur L1 de la première section de mesure partielle (1.1") correspond au moins à la circonférence nominale $U_{nom}$ de la

roue (5), et

- une unité d'évaluation électronique (13) pour recevoir et traiter les valeurs de mesure enregistrées avec le premier appareil de mesure et le deuxième appareil de mesure,

dans lequel ;

- la longueur L2 de la deuxième section de mesure partielle (1.2") dépasse de la longueur L3 d'une section de mesure résiduelle (1.3) la longueur L1 de la première section de mesure partielle, la première section de mesure partielle (1.1") chevauchant complètement la deuxième section de mesure partielle (1.2"), et

- le deuxième appareil de mesure est formé

- - de capteurs de force (8) pour détecter la force d'appui F sur une première longueur partielle de la deuxième section de mesure partielle (1.2"), qui correspond à la première section de mesure partielle (1.1") et

- - de capteurs d'accélération (11) pour détecter l'accélération a exercée par la roue (5) sur le rail (3) sur une deuxième longueur partielle de la deuxième section de mesure partielle (1.2"), qui correspond à la section de mesure résiduelle (1.3), la première longueur partielle et la deuxième longueur partielle donnant ensemble la longueur L2 de la deuxième section de mesure partielle (1.2"), et

- l'unité d'évaluation (13) étant conçue pour créer une courbe de signal de force F(t) sur la longueur L1 à partir des valeurs de mesure du premier appareil de mesure et pour créer une autre courbe de signal sur la longueur L2 à partir des valeurs de mesure du deuxième appareil de mesure, à partir de laquelle il est possible de déduire, sur la base de la vitesse de marche v, la circonférence réelle $U_{ist}$ de la roue (5) ou la période de temps $\Delta t$ qui correspond au roulement de la circonférence réelle de la roue $U_{ist}$ sur la deuxième section de mesure partielle (1.2"),

- la détermination des faux-ronds de la roue (5) étant basée sur un segment de la courbe du signal de force F(t) qui correspond à la circonférence réelle $U_{ist}$ ou à la période de temps $\Delta t$.

3. Dispositif selon la revendication 1 ou 2, **caractérisé en ce que** la longueur de la section de mesure (1, 1', 1") formée par la première section de mesure partielle (1.1, 1.1', 1.1") et la deuxième section de mesure partielle (1.2, 1.2', 1.2") correspond au moins à 1, 2 fois la circonférence nominale $U_{nom}$ de la roue (5), de préférence à au moins à 1,5 fois la circonférence nominale $U_{nom}$, idéalement à au moins à 2 fois la circonférence nominale $U_{nom}$.

4. Dispositif selon la revendication 1 ou 3, **caractérisé en ce que** la première section de mesure partielle (1.1) et la deuxième section de mesure partielle (1.2) se succèdent dans la direction x.

5. Dispositif selon l'une des revendications 1 à 3, **caractérisé en ce que** la première section de mesure partielle (1.1', 1.1") chevauche entièrement ou partiellement la deuxième section de mesure partielle (1.2, 1.2') dans le sens de la marche x.

6. Dispositif selon l'une des revendications 1 à 5, **caractérisé en ce que** la distance entre les capteurs de force (8) adjacents de la première section de mesure partielle (1.1, 1.1', 1.1") est comprise entre 300 mm et 1 000 mm.

7. Dispositif selon l'une des revendications 1 à 6, **caractérisé en ce que** la distance entre les capteurs d'accélération (11) adjacents de la deuxième section de mesure partielle (1.2, 1.2', 1.2") est comprise entre 300 mm et 2 000 mm.

8. Dispositif selon l'une des revendications 1 à 7, **caractérisé en ce que** le rail (3) formant la section de mesure (1, 1', 1") est monté sur des seuils (4) et la distance entre les capteurs de force (8) et/ou les capteurs d'accélération (11) dans la direction x correspond à la distance entre les seuils (4).

9. Dispositif selon l'une des revendications 1 à 8, **caractérisé en ce qu'**un capteur de force transversale (6, 7, 9, 10) ou un conjoncteur de rails est agencé au début et/ou à la fin de la première section de mesure partielle (1.1, 1.1', 1.1") et/ou de la deuxième section de mesure partielle (1.2, 1.2', 1.2").

10. Procédé pour déterminer les faux-ronds d'une roue (5) d'un véhicule sur rails lors du passage d'un rail (3) réalisé sous forme d'une section de mesure (1, 1') dans le sens de la marche x à la vitesse de marche v, qui comprend les étapes suivantes :

a) Détection en continu de la force d'appui F exercée par la roue (5) sur le rail (3) sur la longueur L1 d'une première section de mesure partielle (1.1, 1.1') qui correspond au moins à la circonférence nominale $U_{nom}$ de la roue,

b) Détection en continu de l'accélération a exercée par la roue (5) sur le rail (3) sur la longueur L2 d'une deuxième section de mesure partielle (1.2, 1.2'), où la longueur L2 est supérieure à la longueur L1,

c) Détermination de la circonférence réelle $U_{ist}$ de la roue (5) ou de la période de temps $\Delta t$ qui correspond au roulement de la circonférence réelle de la roue $U_{ist}$ sur la deuxième section de mesure partielle (1.2, 1.2'), en fonction de la vitesse de marche v, par l'évaluation de la courbe de signal enregistrée à l'étape b),
d) Détermination des faux-ronds de la roue (5) en évaluant la courbe du signal de force détecté à l'étape c sur la longueur de la circonférence réelle $U_{ist}$ ou la période de temps $\Delta t$ déterminée.

11. Procédé pour déterminer les faux-ronds d'une roue (5) d'un véhicule sur rails lors du passage d'un rail (3) réalisé sous la forme d'une section de mesure (1") dans le sens de la marche x à la vitesse de marche v, la section de mesure (1") comprenant une première section de mesure partielle (1.1") de longueur L1 et une deuxième section de mesure partielle (1.2") de longueur L2 qui se chevauchent dans le sens de la marche x, la longueur L2 de la deuxième section de mesure partielle (1.2") dépassant de la longueur L3 d'une section de mesure résiduelle (1.3) la longueur L1 de la première section de mesure partielle (1.2"), qui comprend les étapes suivantes :

a) Détection en continu de la force d'appui F exercée par la roue (5) sur le rail (3) sur la longueur L1 de la première section de mesure partielle (1.1"), qui correspond au moins à la circonférence nominale $U_{nom}$ de la roue, la première section de mesure partielle (1.1") correspondant à une première longueur partielle de la deuxième section de mesure partielle (1.2"),
b) Détection en continu de l'accélération a exercée par la roue (5) sur le rail (3) sur une deuxième longueur partielle de la deuxième section de mesure partielle (1.2"), qui correspond à la section de mesure résiduelle (1.3), la première longueur partielle et la deuxième longueur partielle donnant conjointement la longueur L2 de la deuxième section de mesure partielle (1.2"),
c) Transformation de la courbe d'accélération a, détectée en continu à l'étape b) sur la deuxième longueur partielle de la deuxième section de mesure partielle (1.2"), en une courbe de signal de force et combinaison de la courbe de signal de force ainsi obtenue avec la courbe de la force d'appui F détectée en continu à l'étape a) sur la première longueur partielle de la deuxième section de mesure partielle (1.2"),
d) Détermination de la circonférence réelle $U_{ist}$ de la roue (5) ou de la période de temps $\Delta t$, qui correspond au roulement de la circonférence réelle de la roue $U_{ist}$ sur la deuxième section de mesure partielle (1.2"), sur la base de la vitesse de marche v, en évaluant la courbe de signal obtenue à l'étape c),
e) Détermination des faux-ronds de la roue (5) par évaluation de la courbe de signal de force enregistrée à l'étape a) sur la longueur de la circonférence réelle $U_{ist}$ ou de la période de temps $\Delta t$ obtenue à l'étape d).

12. Procédé selon la revendication 10, **caractérisé en ce que** les étapes a) et b) se succèdent dans le temps.

13. Procédé selon la revendication 10 ou 11, **caractérisé en ce que** les étapes a) et b) sont réalisées entièrement ou partiellement en parallèle.

14. Procédé selon l'une des revendications 10 à 13, **caractérisé en ce que** l'évaluation de la courbe de signal enregistrée à l'étape b) pour déterminer la circonférence réelle $U_{ist}$ de la roue (5) ou la période de temps $\Delta t$ selon l'étape c) s'effectue par autocorrélation.

Figur 1

Figur 2

# Figur 3

# Figur 4

EP 4 098 991 B1

Figur 5

Figur 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1212228 B1
- EP 0282615 A1
- EP 1883565 A1
- FR 2893900 A1
- DE 102019114288 A1